# EUROPEAN PATENT APPLICATION

(11) **EP 1 577 788 A1**
(43) Date of publication of application: **21.09.2005**
(21) Application number: 04771305.2
(22) Date of filing: 30.07.2004
(51) Int. Cl.: G06F 15/00, H04L 12/56, G06F 17/60, G06F 13/00, H04M 11/00

(54) **RELAY SERVER, RELAY SERVER SERVICE MANAGEMENT METHOD, SERVICE PROVIDING SYSTEM, AND PROGRAM**

(30) Priority: 06.08.2003 JP 2003287564; 28.07.2004 JP 2004220552
(71) Applicant: MATSUSHITA ELECTRIC INDUSTRIAL CO., LTD., Osaka 571-8501 (JP)
(72) Inventor: MOCHIDA, Naoyuki, Tokyo 140-0014 (JP)
(74) Representative: Grünecker, August
(86) International application number: PCT/JP2004/011302
(87) International publication number: WO 2005/015418

(57) **Abstract**

An application service delivery method capable of making use of an existing SIP server function and easily carrying out authentication and billing. When a user who operates a client (100) requests a service delivered by an application server (103), the present method establishes an SIP session (104) between a client (100) and application server (103) using a standard SIP procedure via a relay server (101) and provides a direct service between the client (100) and application server (103) after establishment of the SIP session (104) . The relay server (101) carries out user authentication in the stage of establishment of the SIP session (104), which eliminates the necessity for the authentication function of the application server (103) and makes it possible to easily construct the application server (103).

## Description

### Technical Field

The present invention relates to a service delivery scheme whereby a plurality of servers cooperate with one another to deliver a service to a user using a Session Initiation Protocol (SIP).

### Background Art

As the Internet becomes widespread and the number of so-called broadband users who access the Internet using bands of several Mbps or more increases in recent years, there is a growing demand for services taking advantage of a broadband network.

One of such broadband services is an Internet telephone service. With an Internet telephone, a terminal on the transmitting side sends a transmission request message directed to a terminal on the receiving side to a call control server which is provided by a network using a call control protocol such as an SIP specified by ITU-T Recommendation H.323 and RFC3261 of ITEF. The call control server carries out authentication of the terminal on the transmitting side and requested address analysis of the terminal on the receiving side and relays a transmission request message to the terminal on the receiving side. The terminal on the receiving side sends back a response message for the transmission request to the call control server and the call control server further relays the message to the terminal on the transmitting side. Such exchange of call control messages is carried out through a call control session between the terminal and call control server. Furthermore, through the call control message, channel information through which one receives speech data from the other party and channel information through which one sends own speech data to the other party, etc., are determined. For example, in the case of an SIP, a terminal sends an "INVITE" message whose body includes Session Description Protocol (SDP) information including an IP address and port information which one can receive. The terminal on the receiving side sends back similar information carried on "200 response" which is an SIP response message. When the exchange of call control messages is completed, the terminal sends data to the determined channel address. The call control session used for the exchange of the call control messages is kept until the call is completed.

For individual call control sessions, the call control server generally records terminal information on the transmitting side, terminal information on the receiving side and duration of the session and the call control server uses the information for billing, etc.

On the other hand, services represented by on-line shopping using World Wide Web (WWW) are becoming widespread. A user can access a Web server which provides on-line shopping using a Web browser and purchase a desired article. To purchase an article, the user sends a user ID and password to the Web server through the Web browser, receives authentication and the user is billed by a company which provides the on-line shopping. On the Internet, the user often has to access a plurality of servers which exist on the Net and always feels insecure about the security in exchange of money and personal information. For example, the Unexamined Japanese Patent Publication No. 2002-32502 describes a technology of a server which carries out authentication for each of individuals who access the server. The system described in Patent Document 1 is an agent server system that carries out exchange with various servers safely.

However, though the call control server which provides Internet telephone services has a user authentication function, session control function and billing control function, etc., which can be used per se by other application servers, the call control server only performs a call control function for telephone services, which results in a problem of not providing any functions such as user authentication, session control and billing control for other application servers.

Furthermore, a company which provides an on-line shop needs to perform user information control and billing on each user individually, while the user also needs to have the user ID and password registered in the individual on-line shop and the user is charged from each on-line shop, which results in a problem that the process is troublesome. Patent Document 1 describes a technology of collecting information from other servers, but such a technology cannot solve the above described problem in such a case where a plurality of companies performs their own billing services.

### Disclosure of Invention

It is an object of the present invention to provide an application service delivery method taking advantage of an existing SIP server function and capable of easily performing authentication and billing.

According to an aspect of the present invention, a relay server for realizing the application service delivery method is a relay server that establishes a session between a client terminal and application server, which comprises a request reception section that receives asession establishment request including service request information on the client terminal from the client terminal, an authentication section that controls registration information of the client terminal and authenticates the client terminal from the service request information and the registration information, a search section that searches an application server that delivers a service included in the service request information, a service inquiry relay section that inquires of the application server about whether the service can be delivered to the client terminal or not, a response relay section that receives a response to the inquiry from the application server and sends the response to the client terminal, and a confirmation relay section that establishes, when a connection request is received from the client terminal according to the response, a session between the application server and the client terminal.

According to this configuration, in a session establishment stage, the relay server carries out user authentication, and therefore the application server need not carry out user authentication and it is possible to easily construct the application server. Furthermore, the relay server can improve the utilization efficiency of the user authentication function owned by the relay server itself and reduce operation costs by collecting a fee from the application server, etc.

Furthermore, when the service contents and client information are specified based on rules according to the data included in the service request, it is possible to control client information and service contents more efficiently.

Furthermore, in the case where the relay server further comprises a disconnection request reception section that receives a disconnection request from the client terminal and sends the disconnection request to the application server, a session control section that measures, when a session is disconnected, the duration of the session based on the disconnection request and a time billing section that creates billing information based on the duration, it is possible to measure the session duration and perform billing according to the measured duration. Therefore, when the service delivered by the application server is determined according to the service delivery time, the application server need not measure the service delivery time and the relay server also carries out billing for the application server, and therefore it is possible to easily construct the application server capable of performing billing based on the service delivery time.

Furthermore, when the relay server further comprises an application billing section that creates billing information based on a request from the application server, the billing information collected by the application server is notified to the relay server and the relay server executes billing on the user. Therefore, even when the application server delivers a service that generates billing independently of the service delivery time, for example, a service of purchasing an article, the relay server can execute billing and easily construct the application server that delivers such a service that requires billing independent of the service delivery time.

### Brief Description of Drawings

FIG.1 illustrates a configuration example of the system according to Embodiment 1 of the present invention;
FIG.2 illustrates an example of processing by a client, relay server and application server according to Embodiment 1 of the present invention;
FIG.3 illustrates messages between the client, relay server and application server according to Embodiment 1 of the present invention;
FIG.4 illustrates an example of processing by a client, relay server and application server according to Embodiment 2 of the present invention;
FIG.5 illustrates an example of processing by a client, relay server and application server according to Embodiment 3 of the present invention;
FIG. 6 illustrates another example of processing by the client, relay server and application server according to Embodiment 3 of the present invention;
FIG.7 illustrates a configuration example of a client, relay server and application server according to Embodiment 4 of the present invention;
FIG.8 illustrates an example of processing by a client, relay server and application server according to Embodiment 5 of the present invention;
FIG. 9 illustrates a connection relationship between a client, relay server and application server according to Embodiment 6 of the present invention; and
FIG.10 illustrates an example of processing by a client, relay server and application server according to Embodiment 7 of the present invention.

### Best Mode for Carrying out the Invention

With reference now to the attached drawings, embodiments of the present invention will be explained in detail below.

### (Embodiment 1)

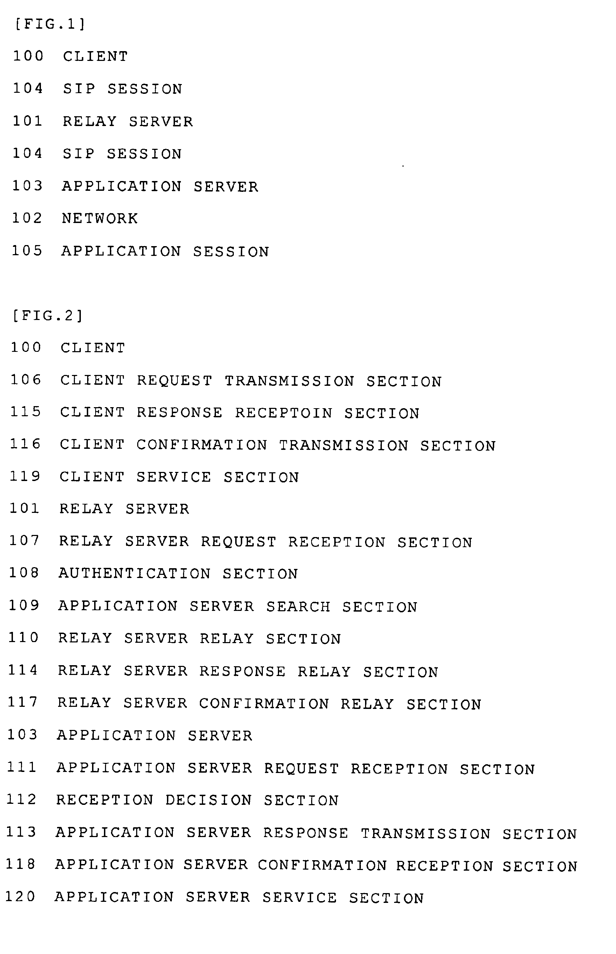

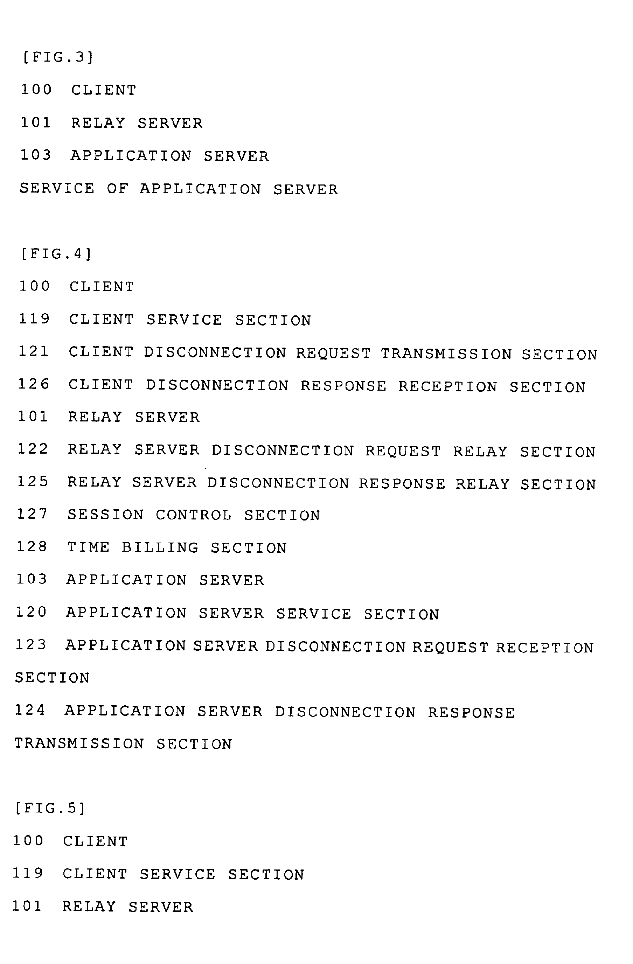

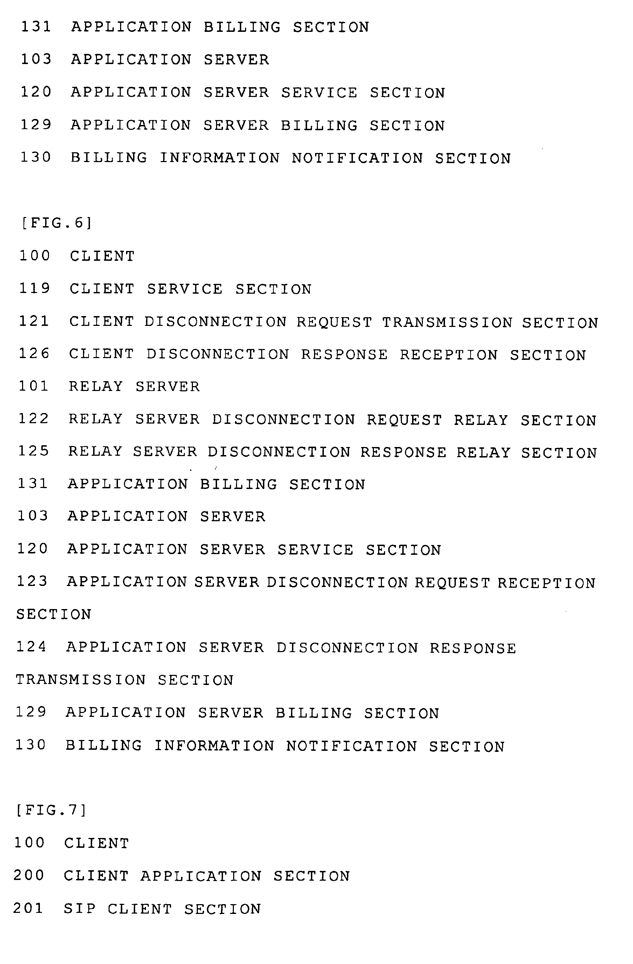

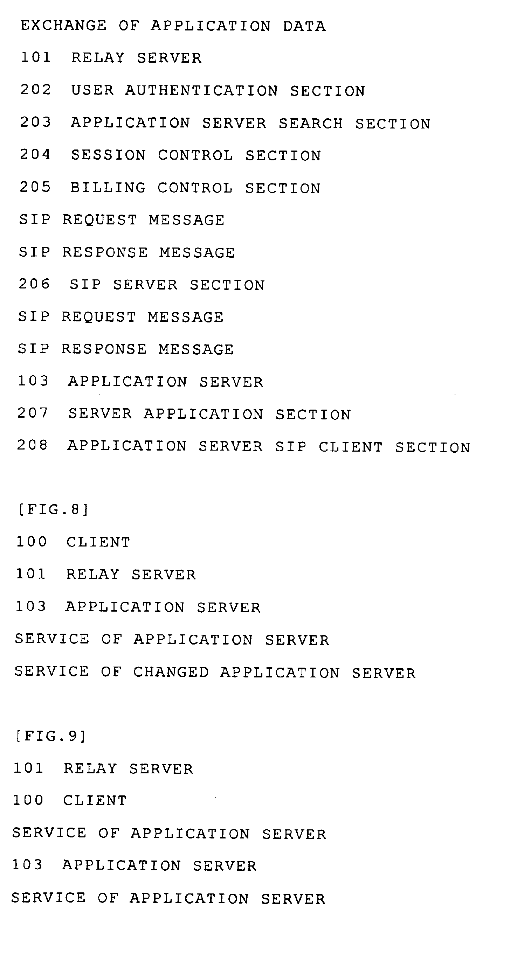

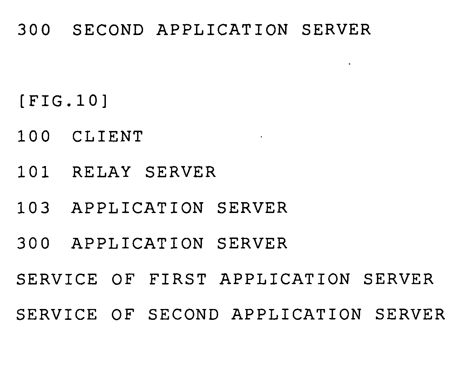

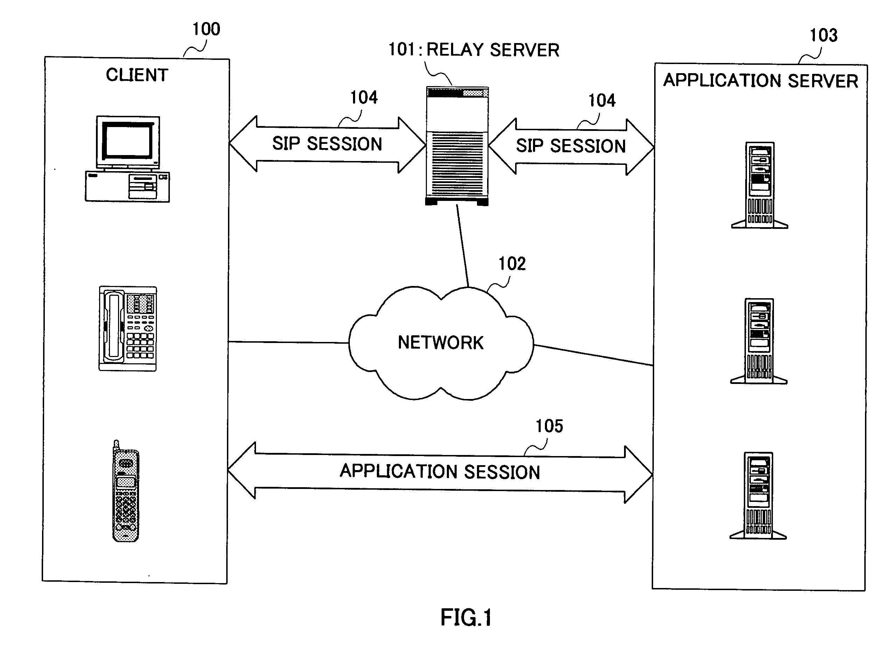

FIG.1 illustrates a configuration example of the system according to Embodiment 1 of the present invention. In FIG.1, a client 100, a relay server 101 and an application server 103 are mutually connected via a network 102. As a client, not only a Personal Computer (PC) but also various types of terminals such as a general telephone set and cellular phone can be connected.

When the client 100 receives a service delivered by the application server 103, an application session 105 is normally directly set between the client 100 and the application server 103, data is transmitted/received over this session and the client 100 thereby receives the service from the application server 103. For example, the user who operates the client 100 starts a Web browser, accesses a Web server provided by the application server 103 to purchase an article and so on. In the present invention, when the user who operates the client 100 receives a service of the application server 103, the user opens an SIP session 104 between the relay server 101 and application server 103 first and then opens the application session 105 to receive the service.

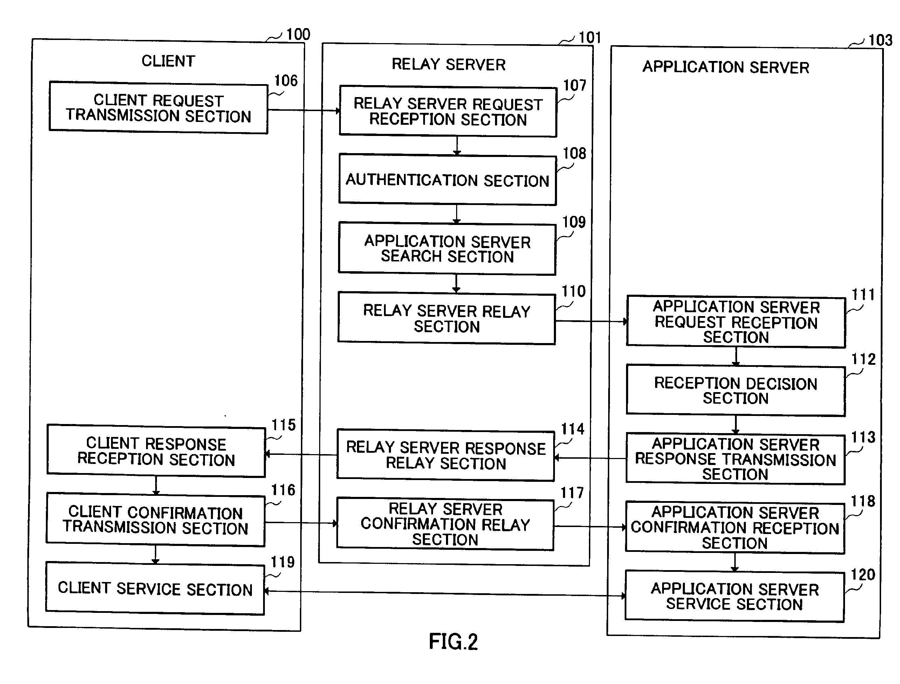

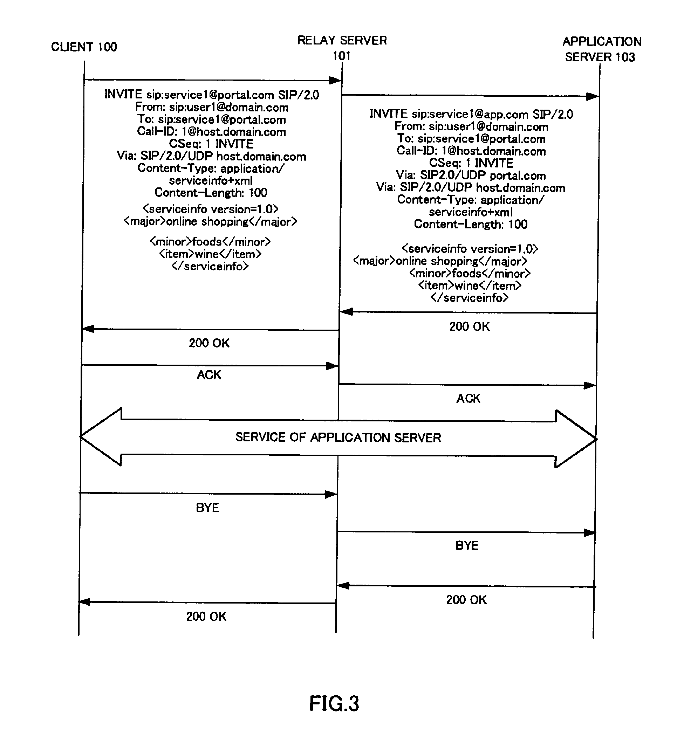

This session opening operation will be explained using FIG.2 and FIG.3. When the user who operates the client 100 tries to receive a service from the application server 103, the client 100 executes a client request transmission section 106 and sends an SIP request message to the predetermined relay server 101 . More specifically, as shown in FIG.3, the client 100 can just send an "INVITE" message. In the SIP request message, the client 100 sets such information that makes clear what service the user is requesting. For example, it is possible to establish and specify a rule that "servicel" controlled by "portal.com" is requested by specifying "INVITE sip:servicel@portal.com SIP/2.0" on a request line of the "INVITE" message. Furthermore, in the case of an SIP, arbitrary data can be set in the message body, and therefore more detailed information of the requested service may be attached to the message body in a format like XML. For example, it is possible to set more detailed information of the requested service by setting a message body in an XML format as in the case of the "INVITE" message shown in FIG.3.

The relay server 101 receives the SIP request message sent by the client 100 through a relay server request reception section 107. The relay server 101 authenticates the user who sent the SIP request using an authentication section 108. The authentication section 108 controls user registration information and carries out authentication based on whether the user has been registered or not and further carries out authentication using a password. For example, since the SIP can set the user ID and password on the "From" line of the message, it is possible to perform authentication using this information or perform authentication of the user using a digest authentication section defined in the SIP.

When the result of the authentication shows that the user has not been registered or that the password is different, an SIP response message containing an error is sent back to the client 100 using a server inquiry relay section (not shown). For example, a "401 Unauthorized" message is sent back.

When the result of the authentication shows that the service can be delivered to the user, the relay server 101 executes an application server search section 109 in order to search the application server 103 that is delivering the service requested by the user. The application server search section 109 controls the correspondence between the service and the application server 103 that can deliver the service and decides whether the service requested by the user can be delivered or not. For example, when it is known from the "INVITE" request line that "service 1" is requested, the application server 103 which delivers "service 1" is searched.

When the result of the search shows that the application server 103 that can deliver the service requested by the user does not exist, the relay server 101 sends back an SIP response message including an error to the client 100 using the above described server inquiry relay section (not shown) . For example, a "404 Not Found" message is sent.

When the result of the search shows that the application server 103 that can deliver the service is found, the relay server 101 relays the SIP request message to the application server 103 using a relay server relay section 110.

The application server 103 receives the SIP request message from the relay server 101 using an application server request reception section 111, decides whether the requested service can be delivered or not using a reception decision section 112 and sends the decision result (SIP response message) to the relay server 101 using an application server response transmission section 113. At this time, it is also possible to set the method of accessing the service delivered by the application server 103 in the SIP response message.

A decision may also be made according to the number of requested services that can be delivered simultaneously and user information independently owned by the application server 103.

When the decision result shows that an error needs to be returned, for example, a message like "404 Not Found" or "503 Service Unavailable" is sent.

The relay server 101 relays the received SIP response message to the client 100 using a relay server response relay section 114.

The client 100 receives the SIP response message using a client response reception section 115. When the received SIP response message includes an error, the client 100 indicates the error to the user and does not deliver the service. When the received SIP response message is normal, the client 100 sends an SIP confirmation message to the relay server 101 using a client confirmation transmission section 116 to establish an SIP session. More specifically, an ACK message can be sent. When the client 100 sends the ACK message, the client 100 executes a client service section 119 and starts to receive a service from the application server 103.

The relay server 101 which has received the SIP confirmation message relays the SIP confirmation message to the application server 103 using a relay server confirmation relay section 117.

When the application server 103 receives the SIP confirmation message using an application server confirmation reception section 118, the application server 103 starts a service for the client 100 using an application server service section 120.

For example, when the application server 103 is delivering a service by the Web server, it is possible to notify the address of the service delivered to the client 100 by setting the URL (Uniform Resource Locator) of the Web server in the message body of an SIP response message transmitted by the application server 103. The client 100 only needs to start the Web browser through the client service section 119 and access the specified URL. Furthermore, the application server 103 may also execute an application server service section 120 first and start a service with the client service section 119.

The application server search section 109 can also search a plurality of application servers 103 that can deliver services requested by the user. In this case, the relay server 101 relays an SIP request message to the plurality of application servers 103. When an SIP response message is received from one application server 103, the SIP response message is relayed to the client 100 and "CANCEL" messages are sent to the remaining application servers 103 to cancel the request for the service. This is an operation that can be performed within a range specified in the SIP standard.

The service contents requested by the client 100 can be set on the request line of "INVITE" or in the message body and the contents of the services provided by the application server 103 can be set in the message body. Since these fields are the fields that can be set when the SIP is used, the SIP function required for the client 100, relay server 101 and application server 103 of the present invention can be a standard SIP function required for a normal Internet telephone and no special functional expansion is required.

Furthermore, even in the case where an Internet telephone service is provided, means for authenticating the user who has transmitted a signal is necessary, and therefore it is possible to construct the relay server 101 of the present invention without adding special functions to the user authentication function of the call control server using the call control server which is providing a normal Internet telephone.

When the user directly calls for a service, the application server 103 returns an error and delivers the service only after establishing an SIP session via the relay server 101 and can thereby prevent delivery of a service without user authentication.

According to the service delivery method in such a configuration, it is possible to execute user authentication at the relay server, and therefore the application server need not perform any user authentication and can thereby construct the application server easily. Furthermore, it is not necessary to even perform user information control and it is possible to thereby reduce operation costs as well.

Furthermore, the relay server can enhance the utilization efficiency of the user authentication function owned by the relay server itself instead of providing only the Internet telephone service using the SIP without adding any special function and reduce the operation costs by, for example, collecting the fee from the application server.

### (Embodiment 2)

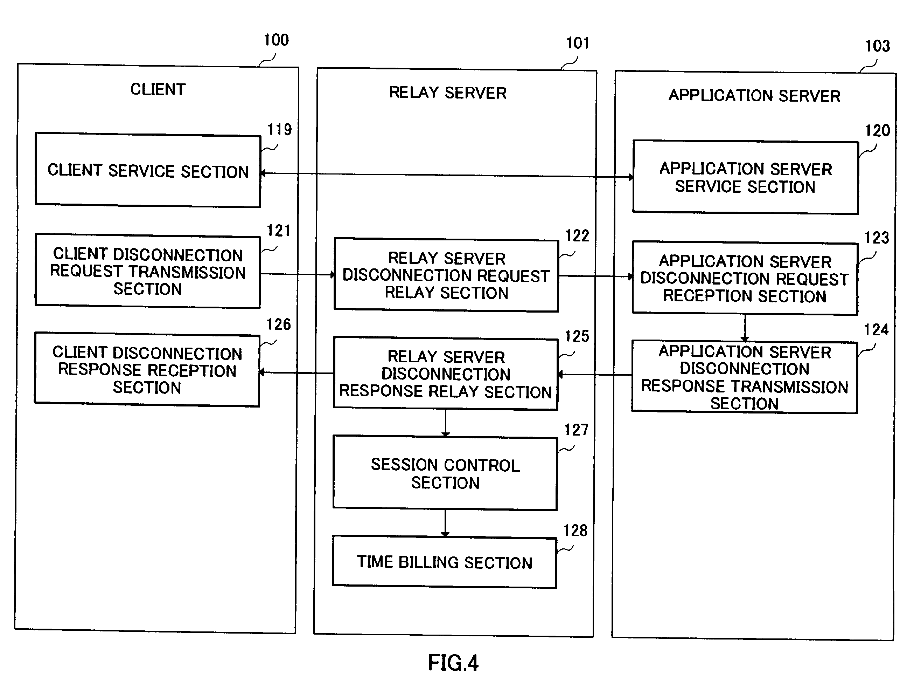

FIG.4 illustrates an example of a procedure for session disconnection processing of a client 100, a relay server 101 and an application server 103 according to Embodiment 2 of the present invention.

When the use of a service delivered by the application server 103 is completed, the client 100 can not only disconnect an application session but also disconnect an SIP session. More specifically, the client 100 uses a client disconnection request transmission section 121 to send a "BYE" message to the relay server 101. The relay server 101 receives the "BYE" message through a relay server disconnection request relay section 122 and relays it to the application server 103. The application server 103 receives the "BYE" message through an application server disconnection request reception section 123, sends a "200 response" through an application server disconnection response transmission section 124 and disconnects the SIP session. The relay server 101 receives the "200 response" to "BYE" through a relay server disconnection response relay section 125 and relays it to the client 100. The client 100 receives the "200 response" to "BYE" through a client disconnection response reception section 126 and disconnects the SIP session.

The relay server 101 measures the duration of the SIP session established between the client 100, relay server 101 and application server 103 through a session control section 127.

More specifically, it is decided that an SIP session is established at a time point at which the relay server confirmation relay section 117 relays the ACK message of the SIP session set at the start of the service and measurement is started. Furthermore, it is decided that an SIP session is disconnected at a time point at which the relay server disconnection response relay section 125 relays "200 response" to the "BYE" message which is a disconnection response of the SIP session and measurement is stopped and it is thereby possible to measure the duration of the session. The measurement result is notified to a time billing section 128 and the time billing section 128 bills the user based on the duration of the SIP session.

This is the case where the client 100 disconnects the SIP session, but the same configuration is also applicable to a case where the application server 103 requests a disconnection and the relay server 101 relays it to the client 100 to disconnect the SIP session.

Furthermore, even when an Internet telephone service is delivered, the function of measuring the duration of a session and the function of billing the user according to the measured time are necessary for the call control server to perform billing according to the call duration, and therefore it is possible to construct the relay server of the present invention without adding special functions to the session control function and billing function of the call control server which provides a normal Internet telephone.

According to the service delivery method in such a configuration, the relay server can measure the duration of an SIP session and perform billing according to the measured time.

Therefore, when the service delivered by the application server is determined according to the service delivery time such as distribution of video and English conversation class, etc., the application server need not measure the service delivery time and the relay server also carries out billing for the application server, and therefore it is possible to easily construct an application server which can carry out billing based on the service delivery time.

Furthermore, the relay server can enhance the utilization efficiency of the session control function and billing function owned by the relay server itself instead of delivering only the Internet telephone service by the SIP without adding any special function to the SIP function and can also reduce operation costs by, for example, collecting the fee from the application server.

### (Embodiment 3)

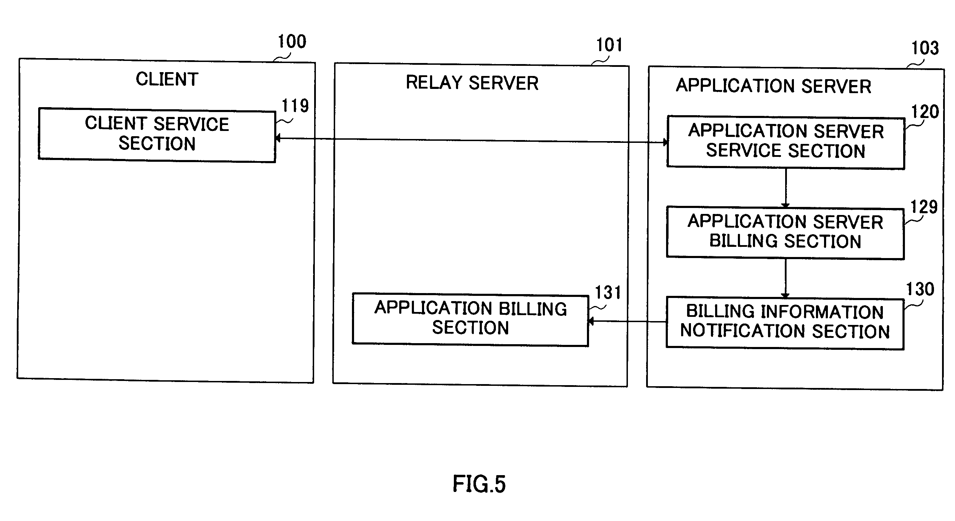

FIG.5 illustrates an example of a procedure for billing processing of a client 100, a relay server 101 and an application server 103 according to Embodiment 3 of the present invention.

In FIG.5, the application server 103 has an application server billing section 129. An application server service section 120 delivers a service to the client 100, but when the need for billing arises from the service delivered, it is notified to the application server billing section 129. The application server billing section 129 receives billing information and notifies it to the relay server 101 using a billing information notification section 130.

The relay server 101 receives the billing information using an application billing section 131 and carries out the billing on the user notified from the application server 103 for the application server. For example, when the application server 103 is providing an on-line shopping Web service, if the user requests purchasing of an article, the application server service section 120 notifies the application server billing section 129 of the name of the article purchased, unit price and quantity, etc., and the application server billing section 129 can notify it to the relay server 101 using the billing information notification section 130. It is possible to use an independent protocol or also an "INFO" message of the SIP section, etc., as the notification method.

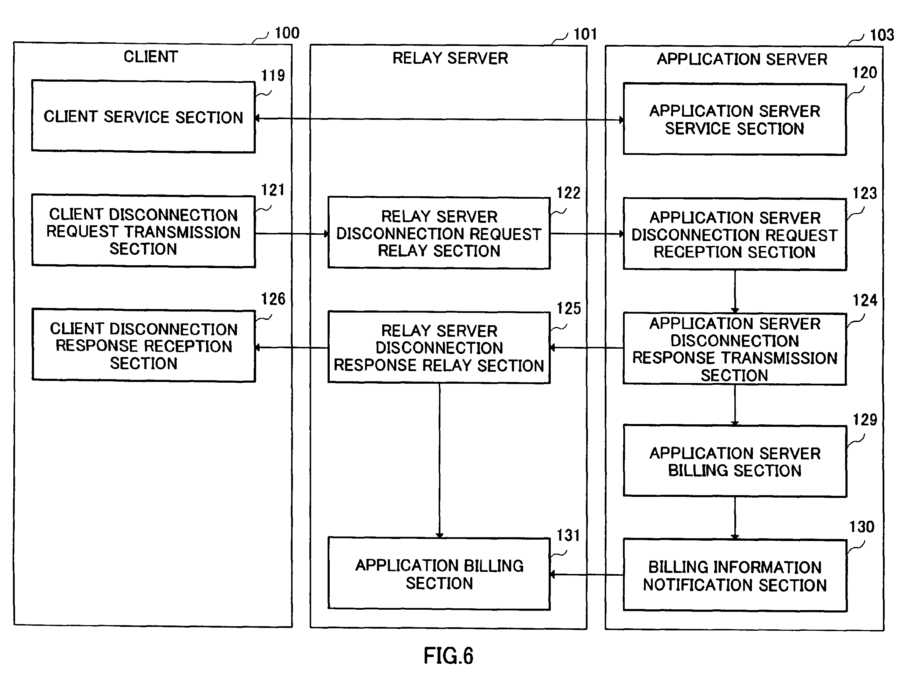

The above described case is an example where the billing is notified from the application server 103 to the relay server 101 every time the need for billing is generated, but FIG.6 shows an example where billing is notified when an application service is completed.

In FIG.6, the application server 103 executes an application server disconnection response transmission section 124, then collects all billing information generated when a session is in progress using the application server billing section 129 and notifies it to the relay server 101 using a billing information notification section 130.

The billing notification may also be included in a disconnection response from the application server 103 to the relay server 101. More specifically, it is also possible to set billing information in the message body of "200 response" to "BYE" and notify it to the relay server 101.

According to the service delivery scheme in such a configuration, the billing information collected by the application server is notified to the relay server, the relay server bills the user, and therefore even when the application server delivers a service which generates billing independently of the service delivery time, for example, a service of purchasing an article, it is possible for the relay server to carry out billing and easily construct the application server which delivers such a service that requires billing which is independent of the service delivery time.

### (Embodiment 4)

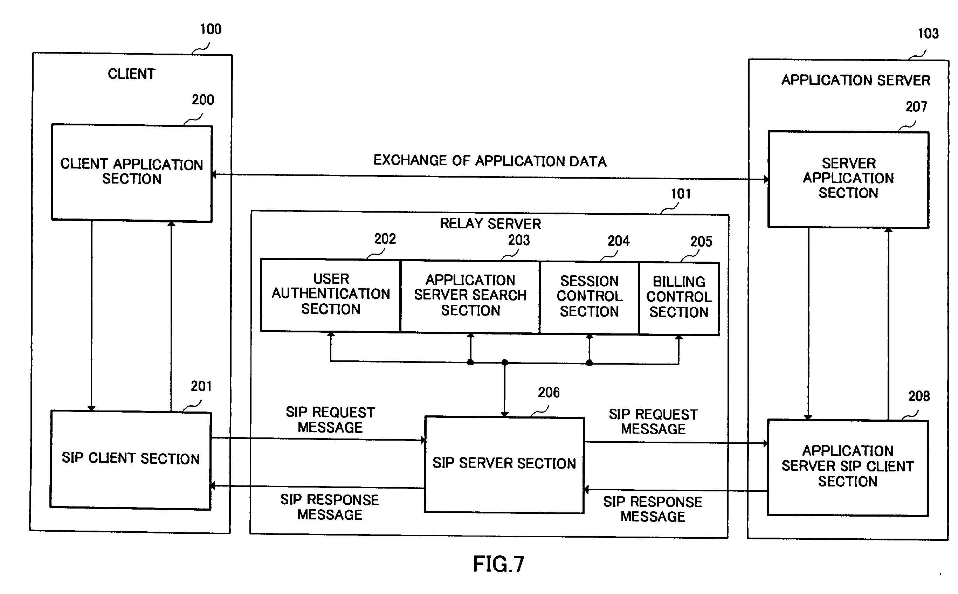

FIG.7 illustrates a configuration example of a client 100, a relay server 101 and an application server 103 according to Embodiment 4 of the present invention.

In FIG.7, the user operates a client application section 200 of the client 100 to request a service from the application server 103. The client application section 200 notifies the user's request to an SIP client section 201. The SIP client section 201 establishes an SIP session with an application server SIP client section 208 of the application server 103 via an SIP server section 206 of the relay server 101 using a standard SIP section.

In the stage of establishment of an SIP session, the SIP server section 206 of the relay server 101 authenticates the user or searches the application server 103 which is delivering a service requested by the user using the functions of a user authentication section 202 and an application server search section 203.

After establishment of the SIP session, the client application section 200 communicates with a server application section 207 and the user receives the service.

When the user operates the client application section 200 to end the use of the service, the client application section 200 notifies it to the SIP client section 201 and the SIP client section 201 uses a standard SIP section to disconnect the SIP session with the application server SIP client section 208 of the application server 103 via the SIP server section 206 of the relay server 101.

A session control section 204 of the relay server 101 monitors the establishment and disconnection of the SIP session and measures the duration of the SIP session.

A billing control section 205 of the relay server 101 bills the user based on the measurement result of the session control section 204.

When the service delivered to the user needs to be billed, the server application section 207 directly notifies the billing information to the billing control section 205 of the relay server 101 or notifies the billing information to the application server SIP client section 208 and notifies it to the relay server 101 together with an SIP disconnection response message.

The billing control section 205 bills the user based on the billing information of the application server 103 directly received or received via the SIP server section 206.

### (Embodiment 5)

Embodiment 5 is a case where a service at an existing session is changed.

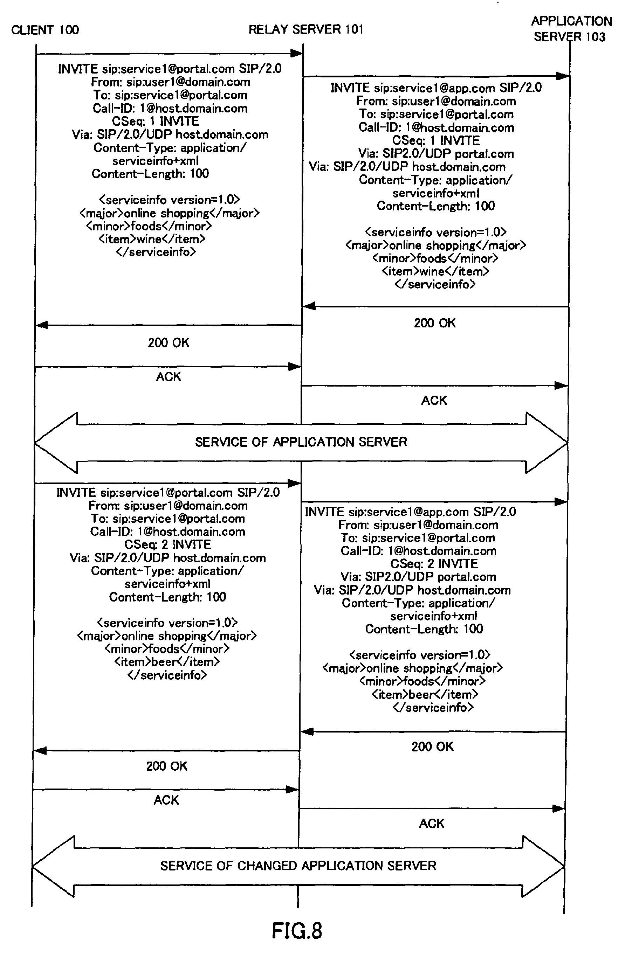

FIG.8 illustrates an example of processing by a client 100, a relay server 101 and an application server 103 according to Embodiment 5 of the present invention.

In FIG. 8, the client 100 establishes a session using the procedure of the present invention and receives a service from the application server 103. For example, when the application server 103 is a Web server, for example, a Web page is displayed.

At this time, in order to change the service received from the application server 103, the client 100 sends a session change request message describing the change contents of the service to the relay server 101. For example, when an SIP is used, a "Re-INVITE" message or "UPDATE" message is sent. Typically, the request line is set to the same value as that set when the first session was established and only the part of service details set in the message body can be changed. For example, in the first "INVITE" in FIG. 8, an on-line shopping service about wine is requested and in the updated "INVITE", an on-line shopping service about beer is requested.

The relay server 101 relays the session change request received from the client 100 to the application server 103 using the relay server relay section 110.

The application server 103 receives a message from the relay server 101 using the application server request reception section 111, decides whether the requested service can be delivered or not using the reception decision section 112 and sends the decision result to the relay server 101 using the application server response transmission section 113.

The relay server 101 relays the received response message to the client 100 using the relay server response relay section 114.

The client 100 receives the response message using the client response reception section 115. When the received response message includes an error, the client 100 indicates the error to the user and does not deliver the service. When the received response message is normal, the client 100 sends a confirmation message to the relay server 101 using the client confirmation transmission section 116 in order to establish a session. More specifically, an ACK message can be transmitted. When the client 100 sends anACKmessage, it executes the client service section 119 and starts to receive a service from the application server 103.

The relay server 101 which has received the confirmation message relays the confirmation message to the application server 103 using the relay server confirmation relay section 117.

Upon receipt of the confirmation message, the application server 103 starts a service for the client 100 using the application server service section 120.

The session change request can be likewise implemented using a method of sending an "UPDATE" message as well, but in the case of the "UPDATE" message, there is no need to send an ACK message to confirm it when the response message is received, and therefore the above described confirmation message transmission/reception processing is not necessary.

Furthermore, the above described case is the case where the client 100 sends a session change request, but it is also possible to change services delivered by the application server 103 by switching around the roles of the client 100 and application server 103, causing the application server 103 to send a session change request to the client 100.

According to the service deliverymethod in the above described configuration, it is possible to change service contents during the service by the application server and deliver services with a higher level of utility.

### (Embodiment 6)

Embodiment 6 is a case where an existing session is transferred to another application server.

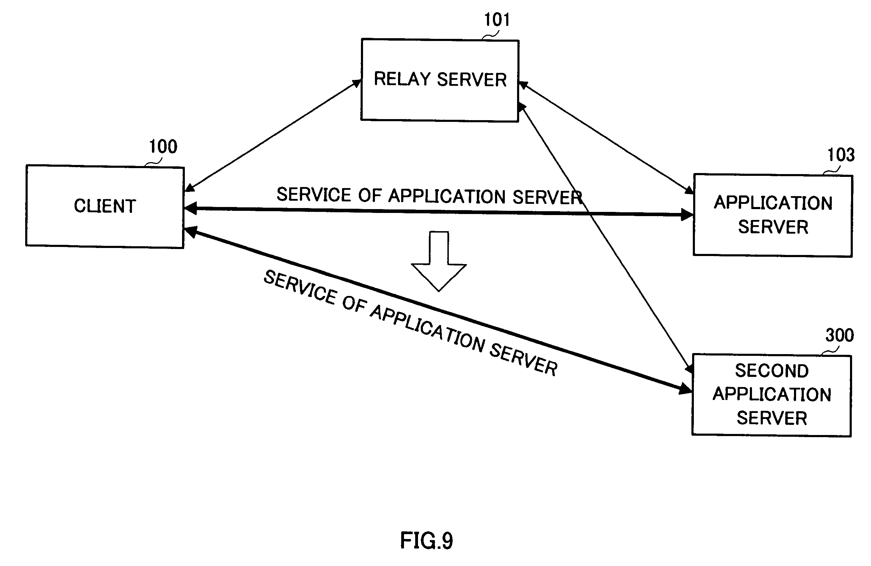

FIG. 9 illustrates a connection relationship between a client 100, a relay server 101 and an application server 103 according to Embodiment 6 of the present invention.

In FIG. 9, the client 100 establishes a session using a procedure of the present invention and receives a service from an application server 103.

At this time, suppose a case where the client 100 changes the application server 103 from which it receives a service to a second application server 300.

The client 100 sends a session transfer request message including service request information to the relay server 101. For example, in the case of an SIP, an "INVITE" message or "REFER" message, etc., can be sent. Depending on the necessity, a message for preparations for the transfer can be exchanged between the client 100, relay server 101 and application server 103.

Upon reception of a session transfer request, the relay server 101 carries out authentication as in the case of Embodiment 1, searches for the second application server 300 that is delivering the requested service based on the service request information set in the session transfer request and sends the request message including the service request information to the second application server 300.

When the second application server 300 can deliver the service, the second application server 300 sets the fact in a response message and sends it to the relay server 101. At this time, it is also possible to set the method of access to the service delivered by the second application server 300 in the response message.

The relay server 101 relays the received response message to the client 100.

When the client 100 receives the response message, the client 100 accesses the second application server 300 to receive the service.

It is also possible to continue the service with the original application server 103 even after the service from the second application server 300 is started.

According to the service delivery method in the above described configuration, it is possible to change to the service from the second application server while the service is being received from the first application server and deliver a flexible service combining a plurality of services.

### (Embodiment 7)

Embodiment 7 is a case where a plurality of sessions is established simultaneously in response to one session establishment request.

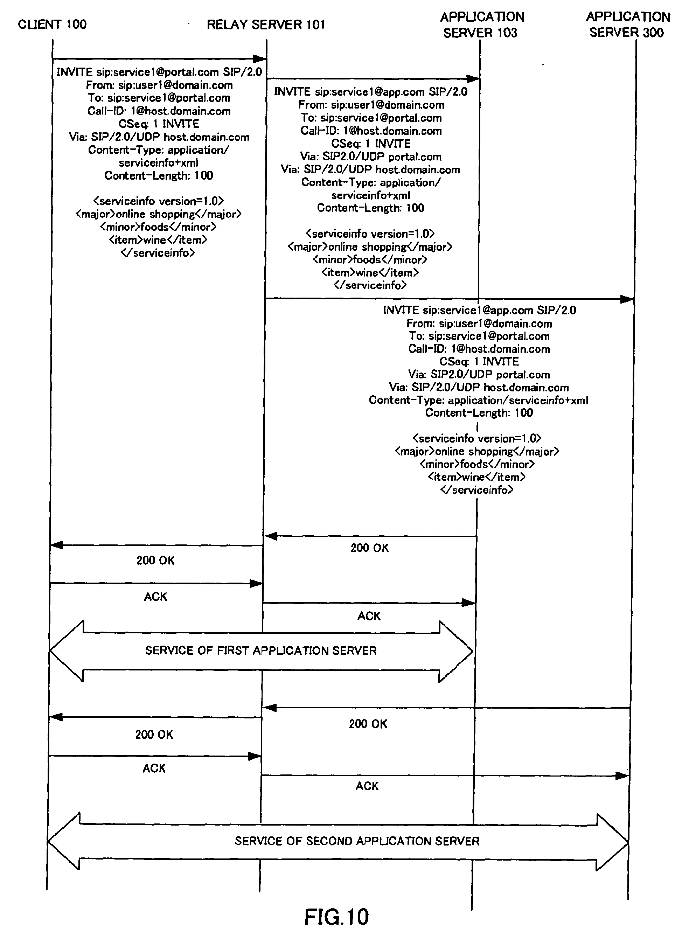

FIG.10 illustrates an example of processing of a client 100, a relay server 101, a first application server 103 and a second application server 300 according to Embodiment 7 of the present invention.

In FIG.10, the client 100 sends a session establishment request message including service request information to the relay server 101.

The relay server 101 carries out authentication and search of a server using the same method as that of Embodiment 1.

When a plurality of application servers is found in the server search, the relay server 101 relays a session establishment request message to all the application servers. For example, in FIG.10, relay is performed to the first application server 103 and the second application server 300. When an SIP is actually used, the relay server 101 can relay one "INVITE" message to a plurality of other parties using a forking function.

The first application server 103 receives a message from the relay server 101 using the application server request reception section 111, further decides whether a requested service can be delivered or not using the reception decision section 112 and sends the decision result to the relay server 101 using the application server response transmission section 113.

The relay server 101 relays the received response message to the client 100 using the relay server response relay section 114.

The client 100 receives a response message using the client response reception section 115. When the received response message includes an error, the client 100 indicates the error to the user and does not deliver the service. When the received response message is normal, the client 100 sends a confirmation message to the relay server 101 using the client confirmation transmission section 116 to establish a session. More specifically, an ACK message can be transmitted. After sending the ACK message, the client 100 executes the client service section 119 and starts to receive a service from the first application server 103.

The relay server 101 which has received the confirmation message relays the confirmation message to the first application server 103 using the relay server confirmation relay section 117.

When the first application server 103 receives the confirmation message, it starts a service for the client 100 through the application server service section 120.

Likewise, the second application server 300 also sends a response message to the relay server 101 and the relay server 101 relays it to the client 100.

At this time, when the client 100 also wants to receive a service from the second application server 300, the client 100 can send a confirmation message using the same method and then receive a service from the second application server 300. Furthermore, since the service with the first application server 103 is started first, if the service is not received from the second application server 300, it is possible to send a confirmation message once and then send a disconnection message to the relay server 101 and disconnect the session with the second application server 300.

For example, when the user requests a service for purchasing a book at an on-line shop, the relay server 101 relays the request to a plurality of application servers that are delivering a book store service, allows the user to access the on-line shops of the plurality of book stores simultaneously as a result, and it is thereby possible, for example, to display Web pages of both book stores simultaneously and compare prices, etc.

According to the service delivery method in such a configuration, the client can receive services from a plurality of application servers simultaneously by only sending one request and improve convenience of the user.

As explained so far, according to the present invention, in applications other than an Internet telephone, when the user receives a service from an application server, the user accesses the server via a call control server, then the application server delivers an application service to the user, and in this way the present invention has advantages that it is possible to easily use user authentication, session control and the billing control function and at the same time provide a service delivery method which allows the call control server to be used more effectively.

Furthermore, by allowing the application server to use the user control function and billing function of the call control server provided as an Internet telephone server, the present invention has advantages that it is possible to reduce operation costs of a company which provides an on-line shop, only require the user to store user information for the Internet telephone server and provide a service delivery method which allows collective billing from the Internet telephone server.

This application is based on the Japanese Patent Application No. 2003-287564 filed on August 6, 2003 and Japanese Patent Application No. 2004-220552 filed on July 28, 2004, entire content of which is expressly incorporated herein by reference.

### Industrial Applicability

In the present invention, when a service is delivered to a user, an SIP session is established via a relay server using a standard SIP section, then an application server directly delivers the service to the user, so that it is possible to simply use the user authentication function, session control function and billing control function of the relay server. Therefore, the present invention has the effect that it is possible to reduce application server construction costs and operation costs and at the same time improve the utilization efficiency of the relay server, and is preferably applicable to an SIP server which can also control services of the application server for the client.

## Claims

1. A relay server for establishing a session between a client terminal and application server, comprising:
a request reception section that receives a session establishment request including service request information of said client terminal from said client terminal;
an authentication section that controls registration information of said client terminal and authenticates said client terminal from said service request information and said registration information;
a search section that searches an application server that delivers a service included in said service request information;
a service inquiry relay section that inquires of said application server about whether it is possible to deliver said service to said client terminal or not;
a response relay section that receives a response to said inquiry from said application server and sends the response to said client terminal; and
a confirmation relay section that establishes, when a connection request is received from said client terminal according to said response, a session between said application server and said client terminal.

2. The relay server according to claim 1 that specifies service contents and client information based on rules according to the data included in the service request.

3. The relay server according to claim 1, further comprising:
a disconnection request reception section that receives a disconnection request from said client terminal and sends the disconnection request to said application server;
a session control section that measures the duration of the session when the session is disconnected based on said disconnection request; and
a time billing section that creates billing information based on said duration.

4. The relay server according to claim 1, further comprising an application billing section that creates billing information based on a request from said application server.

5. The relay server according to claim 1, further comprising a change request reception section that receives a session change request including service change information of said client terminal for an established session from said client terminal,
wherein said search section searches an application server which delivers the changed service included in said service change information in response to said session change request, and
said service inquiry relay section inquires of said application server about whether it is possible to provide said changed service to said client terminal or not.

6. The relay server according to claim 1, further comprising a transfer request reception section that receives a session transfer request including service request information of said client terminal for the established session from said client terminal,
wherein said search section searches a second application server that delivers a service included in said service request information in response to said session transfer request,
said service inquiry relay section inquires of said second application server about whether it is possible to provide said service to said client terminal or not, and
said response relay section receives a response to said inquiry from said second application server and sends the response to said client terminal.

7. The relay server according to claim 1, wherein said search section searches at least one application server that delivers a service included in said service request information,
said service inquiry relay section inquires of all the searched application servers about whether it is possible to provide said service to said client terminal or not,
said response relay section receives a response to said inquiry from said each application server and sends the response to said client terminal, and
when said confirmation relay section receives a connection request from said client terminal according to said each response, said confirmation relay section establishes a plurality of sessions between said each application server and said client terminal for one session establishment request.

8. A relay server service control method for a relay server to control a service delivered by an application server to a client terminal, comprising:
a step of receiving a session establishment request including service request information of said client terminal from said client terminal;
a step of authenticating said client terminal from said service request information and client information registered beforehand;
a step of searching an application server that delivers a service included in said service request information;
a step of inquiring of said application server about whether it is possible to deliver said service to said client terminal or not;
a step of receiving a response to said inquiry from said application server and sending the response to said client terminal; and
a step of establishing a session between said client terminal and said application server based on the response from said client terminal.

9. A program for causing a computer to function as the relay server according to claim 1.

10. A service delivery system for a relay server to control exchange of application data between a client apparatus and application server, said relay server comprising:
an SIP server section that controls a session between said client apparatus and said application server using an SIP;
a user authentication section that authenticates said client apparatus;
an application server search section that searches said application server;
a session control section that monitors establishment and disconnection of said session; and
a billing control section that controls billing on said client apparatus based on monitoring information of said session control section,
said client apparatus comprising:
an SIP client section that requests establishment and disconnection of a session with said application server using an SIP; and
a client application section that exchanges application data with said application server, and
said application server comprising:
an application server SIP client section that receives a request of said client apparatus from said SIP server section; and
a server application section that exchanges application data with said client apparatus.
